# DEMANDE DE BREVET EUROPEEN

(11) **EP 0 859 030 A1**
(43) Date de publication de la demande: **19.08.1998**
(21) Numéro de dépôt: 97400972.2
(22) Date de dépôt: 29.04.1997
(51) Int. Cl.: C08L 95/00, C10C 3/02

(54) **Emulsion aqueuse d'un produit bitumineux**

(30) Priorité: 17.02.1997 FR 9701812
(71) Demandeur: GERLAND Routes, 69100 Villeurbanne (FR)
(72) Inventeur: Pasquier, Michel, 69960 Corbas (FR)
(74) Mandataire: Rousset, Jean-Claude

(57) **Abrégé**

L'incorporation de paraffine et/ou de polyéthylèneglycol dans la phase bitumineuse, à une concentration pondérale de l'ordre de 10 %, permet d'obtenir, sur les chantiers routiers, des couches d'accrochage ne collant pas aux pneumatiques des engins de chantier.

## Description

L'invention concerne une émulsion bitumineuse pour la réalisation d'une couche d'accrochage dans la construction de routes.

Dans l'industrie de la construction routière les émulsions aqueuses de bitume ou de produits bitumineux sont employées dans divers buts. On peut citer notamment:
- la réalisation d'enduits superficiels;
- la réalisation d'enrobés coulés à froid ou slurry;
- la réalisation de graves-émulsions;
- la réalisation de couches d'accrochage et d'imprégnation;
- la réalisation d'enrobés à froid.

Ces émulsions sont de formulations différentes suivant leurs usages. Cependant il s'agit toujours d'une dispersion de bitume ou de produit bitumineux dans une phase aqueuse à l'aide d'un tensioactif grâce à un apport d'énergie. Cette énergie est apportée soit par un moulin colloïdal soit par tout autre dispositif propre à assurer la dispersion.

Les couches d'accrochage ont pour fonction de coller entre elles les différentes couches de constitution des chaussées. Elles permettent d'assurer la liaison entre deux couches de bétons bitumineux en collant la couche supérieure à la couche inférieure. Ce collage est déterminant quant à la durée de vie de la chaussée. Dans la pratique on répand à l'aide d'un engin approprié de l'émulsion sur la couche inférieure et on attend la rupture (séparation de la phase aqueuse de la phase bitumineuse). On est alors en présence d'un film bitumineux apte à assurer le collage lorsque la couche supérieure sera mise en place par-dessus. Si les couches d'accrochage traditionnelles remplissent correctement la fonction de collage, elles posent cependant des problèmes lors de la mise en oeuvre:
- Les roues des engins roulant dans cette couche, notamment des camions d'enrobé (béton bitumineux), collent à la couche. Ce phénomène entraîne une détérioration de la couche d'accrochage dans le sillon de circulation des roues préjudiciable à la qualité du collage des couches de chaussée voire une détérioration du support s'il est fragile.
- Les engins dont les roues sont souillées par cette couche d'accrochage entraînent hors du chantier des produits bitumineux et les déposent sur la voirie environnante. Ces dépôts dégradent les marquages et autres signalisations horizontales et entraînent des désordres esthétiques.

Diverses solutions à ces problèmes ont été envisagées:
- Un léger gravillonnage de la couche d'accrochage traditionnelle. Cette solution restaure la propreté mais nuit à la qualité du collage. Elle nécessite un engin supplémentaire pour répandre les gravillons sur la surface de la couche d'accrochage.
- Un système complexe qui procède par trois répandages successifs (avec un engin spécifique) d'un primaire d'adhérence, d'une émulsion de bitume dur et d'un rupteur (pour accélérer la rupture de l'émulsion). Cette technique est complexe et onéreuse.
- L'utilisation d'un finisseur à rampe intégrée qui répand l'émulsion juste avant l'enrobé. Cette technique est efficace concernant la propreté mais fait appel à un matériel spécifique et très onéreux en entretien et maintenance.

Le but de l'invention est d'offrir une couche d'accrochage collant parfaitement les couches entre elles sans coller aux roues des engins, de façon à éviter l'entraînement de produits bitumineux sur la voirie environnante sans alourdir les techniques de mise en oeuvre.

L'effet salissant d'une couche d'émulsion rompue ou d'une couche de produit bitumineux répandue sur le sol provient de deux phénomènes:
- Un effet collant immédiat ou "tack" qui se manifeste par une adhérence immédiate sur les roues des engins. Les roues ainsi polluées deviennent d'autant plus collantes et entraînent le produit bitumineux au-delà de la zone du chantier. Cet effet se manifeste pour des températures relativement basses avec des couches d'accrochages traditionnelles (environ 5 °C).
- Une faible consistance du produit bitumineux, d'autant plus prononcée que la température est plus élevée, qui le rend suffisamment mou pour napper et mouiller les roues des engins.

La limitation de l'un de ces deux phénomènes n'est pas suffisante pour obtenir une couche d'accrochage propre réellement efficace. C'est pourquoi la seule utilisation d'un bitume dur ou rendu dur par ajout d'un additif (polymère par exemple) ne permet pas d'atteindre l'objectif visé. D'autre part l'ajout d'un additif qui limiterait l'effet collant ne permet pas d'avoir une couche d'accrochage qui reste propre lorsque la température du support atteint des valeurs élevées (50 °C). On peut remarquer qu'une émulsion de bitume dur ou très dur (dont la pénétrabilité suivant la norme NF T66-004, déterminée à 25 °C et 5 secondes, est comprise entre 10 et 30 dixièmes de mm) peut remplir une partie de l'objectif (couche résiduelle, après rupture de l'émulsion, peu collante et non molle) mais la couche résiduelle est très fragile, peu cohésive car un bitume de cette dureté est peu filmogène, et peu adhérent au support.

L'invention au contraire cumule les avantages suivants:
- Un effet collant de la couche résiduelle nul après rupture de l'émulsion.
- Une couche résiduelle non affectée par la température jusqu'à 70 °C.
- Un effet filmogène conduisant à une très bonne adhérence au support.
- Une conservation de l'intégrité de la couche d'accrochage sous trafic.
- Un très bon collage de la couche supérieure sur la couche inférieure.

L'invention vise notamment une émulsion bitumineuse du genre défini en introduction, et prévoit qu'elle contient au moins un additif propre à limiter l'effet collant immédiat du bitume et/ou à renforcer sa consistance à une température inférieure à 70 °C, choisi dans les groupes formés par:
a) les substances propres à prendre, en fonction de la température, un état solide et un état fluide dans lesquels elles augmentent et diminuent respectivement la consistance de l'émulsion; et
b) les polymères solubles dans l'eau.

Des caractéristiques optionnelles de l'émulsion selon l'invention, complémentaires ou alternatives, sont énoncées ci-après:
- Elle contient un additif du groupe a) choisi parmi la paraffine, les cires d'origines pétrolière, animale et végétale, les cires fossiles, les cires synthétiques, les cires de polyéthylène et de polypropylène et les polypropylènes atactiques, les acides gras à longue chaîne modifiés ou non, les polyoléfines telles que polyéthylènes basse densité et haute densité, les polyoléfines modifiées telles que copolymères éthylène-acétate de vinyle, copolymères éthylène-acétate de méthyle et copolymères éthylène-acétate de butyle.
- Elle contient du polyéthylèneglycol en tant qu'additif du groupe b).
- Elle contient un additif du groupe b) choisi parmi les méthoxypolyéthylèneglycols, les éthers de glycol et les polyols.

L'émulsion peut contenir, soit au moins un additif du groupe a) et au moins un additif du groupe b), soit au moins un additif du groupe a) à l'exclusion de tout additif du groupe b), soit au moins un additif du groupe b) à l'exclusion de tout additif du groupe a).

L'invention a également pour objet un procédé de fabrication d'une émulsion telle que définie ci-dessus, dans lequel on disperse ledit additif dans du bitume chaud, puis on mélange le liant résultant et une solution aqueuse d'émulsifiant.

Dans le procédé selon l'invention, la quantité d'additif est avantageusement comprise entre 1 et 15 % environ par rapport au poids du liant.

L'invention vise encore une couche d'accrochage pour la construction de routes obtenue par épandage et rupture d'une émulsion bitumineuse telle que définie plus haut.

Les caractéristiques et avantages de l'invention seront exposés plus en détail dans la description ci-après de quelques exemples de réalisation.

### Exemples 1 à 5

Ces exemples définissent des émulsions selon l'invention dont les formulations sont données dans les tableaux 1 à 5 respectivement, le polyéthylèneglycol étant caractérisé par sa masse molaire et la paraffine par sa température de fusion.

La paraffine est un mélange à base d'hydrocarbures aliphatiques, solide à température ordinaire, disponible dans le commerce, notamment auprès de la Société MOBIL OIL, sous la désignation MOBILWAX, et de la Société BP.

L'émulsifiant utilisé est une diamine de suif commercialisée par la Société CECA sous la dénomination "Émulsamine L60".

**TABLEAU 1**

| **Phases** | **Constituants** | **Quantités en kg** |
|---|---|---|
| Phase bitumineuse | Bitume 10/20 | 450 |
| | Polyéthylèneglycol 600 | 50 |
| Phase aqueuse | Eau | 495,5 |
| | Émulsamine L60 | 2,5 |
| | Acide chlorhydrique 37% | 2 |

L'émulsion est fabriquée dans un moulin colloïdal avec le respect des consignes de température suivantes:
- 60 °C pour la phase aqueuse
- 180 °C pour la phase bitumineuse.

**TABLEAU 2**

| **Phases** | **Constituants** | **Quantités en kg** |
|---|---|---|
| Phase bitumineuse | Bitume 10/20 | 450 |
| | Polyéthylèneglycol 8000 | 50 |
| Phase aqueuse | Eau | 495,5 |
| | Émulsamine L60 | 2,5 |
| | Acide chlorhydrique 37% | 2 |

L'émulsion est fabriquée dans un moulin colloïdal avec le respect des consignes de température suivantes:
- 60 °C pour la phase aqueuse
- 180 °C pour la phase bitumineuse.

**TABLEAU 3**

| **Phases** | **Constituants** | **Quantités en kg** |
|---|---|---|
| Phase bitumineuse | Bitume 10/20 | 475 |
| | Paraffine 58/60 | 25 |
| Phase aqueuse | Eau | 495,5 |
| | Émulsamine L60 | 2,5 |
| | Acide chlorhydrique 37% | 2 |

Les conditions de préparation de l'émulsion sont les mêmes que dans l'exemple précédent.

Dans cet exemple l'ajout de paraffine diminue la viscosité de la phase bitumineuse au delà de 60 °C et facilite l'émulsification.

**TABLEAU 4**

| **Phases** | **Constituants** | **Quantités en kg** |
|---|---|---|
| Phase bitumineuse | Bitume 35/50 | 540 |
| | Polyéthylèneglycol 600 | 30 |
| | Cire HOSTAMONT BS100 | 30 |
| Phase aqueuse | Eau | 595,5 |
| | Émulsamine L60 | 2,5 |
| | Acide chlorhydrique 37% | 2 |

La cire synthétique de l'exemple 4, commercialisée par la société HOECHST sous la référence HOSTAMONT BS100 et fondant à 135 °C, est un acide gras à longue chaîne modifié.

**TABLEAU 5**

| **Phases** | **Constituants** | **Quantités en kg** |
|---|---|---|
| Phase bitumineuse | Bitume 10/20 | 450 |
| | Polyéthylèneglycol 600 | 50 |
| Phase aqueuse | Eau | 493,8 |
| | Émulsamine L60 | 2,2 |
| | Acide chlorhydrique 37% | 2 |
| | CaCl₂ | 2 |

Les conditions de préparation de l'émulsion sont les mêmes que dans l'exemple 2.

On peut également utiliser en tant qu'additif du groupe a) une cire fossile produite par la société allemande ROMONTA GmbH, extraite par solvants à partir de gisements de lignite, ainsi que tous additifs susceptibles d'augmenter la consistance du liant bitumineux à froid, c'est-à-dire aux températures de service (au-dessous de 70-80 °C) et de la diminuer à chaud, c'est-à-dire aux températures de mise en oeuvre.

D'autres émulsifiants que celui mentionné dans les exemples peuvent être utilisés.

La réduction de la susceptibilité thermique est obtenue soit au moyen d'un additif du groupe a) dans un bitume de pénétrabilité élevée, soit en utilisant un bitume dur par exemple de classe 10/20 ou 15/25. D'une manière générale on peut utiliser tous bitumes routiers ou industriels issus de la distillation du pétrole, avec des additifs appropriés.

Le caractère cristallin fortement marqué de certaines paraffines apporte de plus un effet anti-collant pour des températures n'excédant pas 20 °C au-dessous de leur point de fusion ou de ramollissement.

Le polyéthylèneglycol peut être indifféremment ajouté à la phase aqueuse ou à la phase bitumineuse lors de la fabrication. On peut aussi l'incorporer à une émulsion déjà constituée. Cependant il améliore la mise en émulsion des bitumes durs ou durcis par réduction de la viscosité lorsqu'il est préalablement mélangé à celui-ci avant la mise en émulsion.

Les caractéristiques des émulsions constituées à partir de bitumes durs ou durcis additionnés de polyéthylèneglycol ou d'autres additifs du groupe b) sont tout à fait remarquables:
- L'émulsion est bien plus stable qu'une émulsion de bitume dur pur: on note moins de décantation et plus de stabilité chimique.
- L'effet anti-salissure s'exerce de deux façons: la couche résiduelle (après rupture) est totalement non collante pour les roues des engins de chantier, et l'entraînement occasionnel d'émulsion non rompue par les roues des engins est toujours limité et s'efface spontanément sous l'effet du trafic dans les jours qui suivent.
- Le caractère filmogène du liant après rupture est remarquable par rapport à celui d'une émulsion d'un simple bitume dur.

Bien entendu, il est possible d'utiliser dans l'invention des bitumes déjà modifiés, comme connu en soi, par des polymères tels que plastomères ou élastomères.

## Revendications

1. Émulsion bitumineuse pour la réalisation d'une couche d'accrochage dans la construction de routes, caractérisée en ce qu'elle contient au moins un additif propre à limiter l'effet collant immédiat du bitume et/ou à renforcer sa consistance à une température inférieure à 70 °C, choisi dans les groupes formés par:
a) les substances propres à prendre, en fonction de la température, un état solide et un état fluide dans lesquels elles augmentent et diminuent respectivement la consistance de l'émulsion; et
b) les polymères solubles dans l'eau.

2. Émulsion bitumineuse selon la revendication 1, contenant un additif du groupe a) choisi parmi la paraffine, les cires d'origines pétrolière, animale et végétale, les cires fossiles, les cires synthétiques, les cires de polyéthylène et de polypropylène et les polypropylènes atactiques, les acides gras à longue chaîne modifiés ou non, les polyoléfines telles que polyéthylènes basse densité et haute densité, les polyoléfines modifiées telles que copolymères éthylène-acétate de vinyle, copolymères éthylène-acétate de méthyle et copolymères éthylène-acétate de butyle.

3. Emulsion bitumineuse selon l'une des revendications 1 et 2, contenant du polyéthylèneglycol en tant qu'additif du groupe b).

4. Émulsion bitumineuse selon l'une des revendications 1 et 2, contenant un additif du groupe b) choisi parmi les méthoxypolyéthylèneglycols, les éthers de glycol et les polyols.

5. Émulsion bitumineuse selon l'une des revendications précédentes, contenant au moins un additif du groupe a) et au moins un additif du groupe b).

6. Émulsion bitumineuse selon l'une des revendications 1 à 4, contenant au moins un additif du groupe a) à l'exclusion de tout additif du groupe b).

7. Émulsion bitumineuse selon l'une des revendications 1 à 4, contenant au moins un additif du groupe b) à l'exclusion de tout additif du groupe a).

8. Procédé de fabrication d'une émulsion selon l'une des revendications précédentes, dans lequel on disperse ledit additif dans du bitume chaud, puis on mélange le liant résultant et une solution aqueuse d'émulsifiant.

9. Procédé selon la revendication 8, dans lequel la quantité d'additif est comprise entre 1 et 15 % environ par rapport au poids du liant.

10. Couche d'accrochage pour la construction de routes, caractérisée en ce qu'elle est obtenue par épandage et rupture d'une émulsion bitumineuse selon l'une des revendications 1 à 7.
